# EUROPEAN PATENT APPLICATION

(11) **EP 2 466 257 A1**
(43) Date of publication of application: **20.06.2012**
(21) Application number: 10195203.4
(22) Date of filing: 15.12.2010
(51) Int. Cl.: G01C 19/56, G01C 25/00

(54) **Method for matching the natural frequencies of the drive and sense oscillators in a vibrating coriolis gyroscope**

(71) Applicant: SensoNor Technologies AS, 3192 Horten (NO)
(72) Inventor: Blixhavn, Bjorn, 3121, Notteroy (NO); Johansson, Jonas, 11327, Stockholm (SE)
(74) Representative: Haley, Stephen

(57) **Abstract**

A method of matching, in a Coriolis gyroscope, the natural frequency of a sense oscillator to the natural frequency of a drive oscillator, comprising; generating a plurality of pilot tones of different frequencies and adding each pilot tone to a feedback signal that drives the sense oscillator; detecting a gain and phase difference in each pilot tone after it has passed through the sense oscillator; estimating a transfer function for the feedback signal using the detected gain and phase difference for each pilot tone; determining an estimated transfer function, which is indicative of the natural frequency of the sense oscillator; comparing the estimated natural frequency of the sense oscillator to a known natural frequency of the drive oscillator to obtain a difference; and controlling frequency matching electrodes, using the difference, to effect a change in the natural frequency of the sense oscillator.

## Description

The present invention relates to a method for matching the natural frequencies of drive and sense oscillators in a vibrating Coriolis gyroscope during operation.

In order to obtain the highest sensitivity and lowest noise when detecting an oscillation about a sense axis that is induced by the Coriolis effect in a vibrating Coriolis gyroscope it is desirable that the natural frequency of the sense oscillator is identical to the natural frequency of the drive oscillator. This has the effect that the quality-factor (Q) of the sense oscillator amplifies the induced oscillation and is typically known as matched mode operation.

If the matched sense oscillator is left to move freely a high mechanical Q will lead to a large amplitude of oscillation in response to a Coriolis torque, which can create problems related to non-linearity or mechanical over-travel. It will also limit the bandwidth of the gyroscope, since the width of the resonance peak is inversely proportional to the Q.

These undesirable effects can be prevented by implementing an electrical feedback loop around the sense oscillator that can apply an electrostatic torque to the sense oscillator to reduce the closed-loop Q. The magnitude of the feedback signal is proportional to the Coriolis torque, and can be used as the output signal of the gyroscope.

Due to mechanical imperfections in the construction of Coriolis gyroscopes, the drive oscillation will always have a direct influence on the sense oscillator, giving rise to an oscillation that can be much larger than the Coriolis-induced oscillation alone. This false sense signal is of the same frequency, but 90° phase-shifted with respect to the Coriolis signal, and is known as the quadrature signal.

The quadrature signal can be eliminated by multiplying it with a sinusoid having the same frequency and phase as the drive oscillation such that, after low-pass filtering of the product, a demodulated signal proportional only to the Coriolis signal will remain. However, successful removal of the quadrature signal requires the phase of the quadrature signal to be exactly 90 degrees with respect to the drive oscillation, which will be the case when the natural frequency of the sense oscillator is exactly the same as the natural frequency of the drive oscillator.

If the natural frequency of the sense oscillator is different to the natural frequency of the drive oscillator, the sense oscillator will be forced at a frequency different from its natural frequency, and the phase of the quadrature oscillation will no longer be exactly 90°, causing a fraction of the quadrature signal to appear in the demodulated Coriolis signal, thus distorting the measurement of angular rate.

It is known from US-B-5992233 that it is possible to modify the natural frequency of a sense oscillator in a vibrating Coriolis gyroscope during "factory calibration"' by changing the DC voltage of electrodes which interact electrostatically with the sense oscillator mode of a proof mass. Furthermore, a transfer function can be determined to define a relationship between voltage and temperature and this can be used to maintain frequency matching between the drive oscillators and sense oscillators during operation of the gyroscope.

However, factory calibration is performed before the gyroscope goes into operation and therefore a transfer function can only be determined on the basis of conditions at the time of calibration, which are unlikely to match those that the gyroscope will experience during operation. Furthermore, factory calibration cannot compensate for effects of aging, which can lead to deterioration of performance of the gyroscope resulting in reduced accuracy when calculating angular rate.

According to the present invention there is provided a method of matching, in a Coriolis gyroscope, the natural frequency of a sense oscillator to the natural frequency of a drive oscillator, comprising: generating a plurality of pilot tones of different frequencies and adding each pilot tone to a feedback signal that drives the sense oscillator; detecting a gain and phase difference in each pilot tone after it has passed through the sense oscillator; estimating a transfer function for the feedback signal using the detected gain and phase difference for each pilot tone; determining an estimated transfer function, which is indicative of the natural frequency of the sense oscillator; comparing the estimated natural frequency of the sense oscillator to a known natural frequency of the drive oscillator to obtain a difference; and controlling frequency matching electrodes, using the difference, to effect a change in the natural frequency of the sense oscillator.

An example of the present invention will now be described, with reference to the accompanying figures, in which:
Figure 1 shows the basic function of a Coriolis gyroscope;
Figure 2 is a block diagram of a control circuit for a vibrating Coriolis gyroscope according to the present invention;
Figure 3 is a block diagram to show how a pilot tone is demodulated to determine its gain and phase shift in the sense oscillator,
Figure 4 shows an exemplary transfer function such as can be estimated by the method of the present invention.

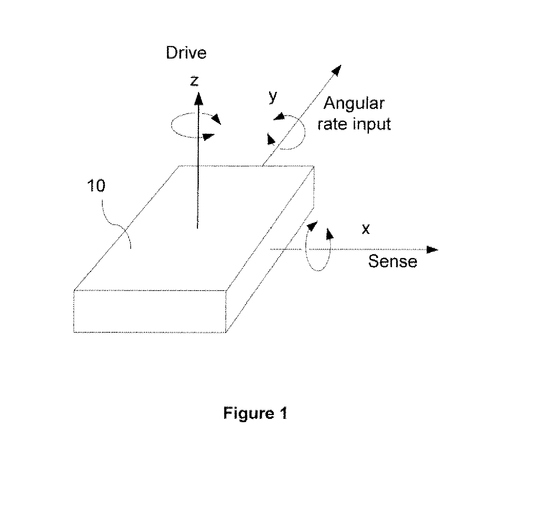

Figure 1 shows the operating principal of a vibrating Coriolis gyroscope.
When an elastically suspended proof mass 10, which is being driven in an angular oscillation about the z-axis (drive axis), is subjected to a rotation about the y-axis (input axis), the Coriolis effect will induce an oscillating torque about the x-axis (sense axis), which can be detected and used to determine the angular rate input.

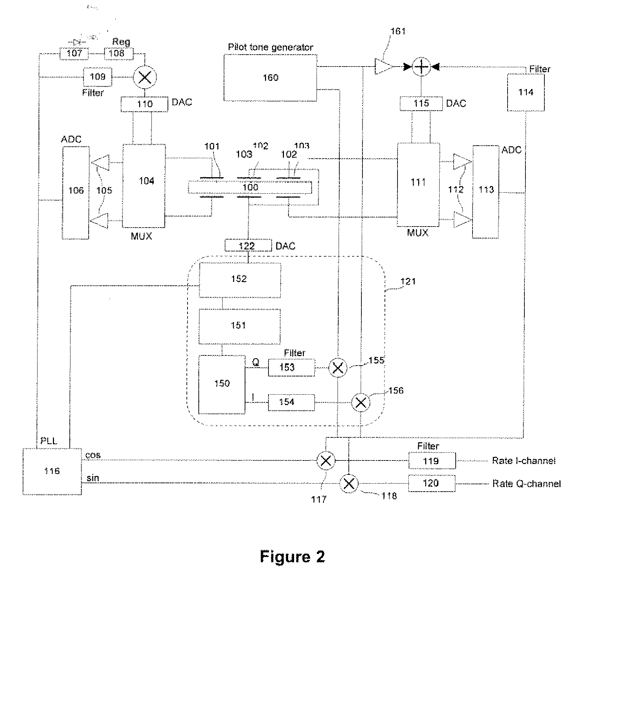

Figure 2 is a block diagram of a control circuit for a vibrating Coriolis gyroscope according to the present invention, wherein at least one proof mass 100 is arranged to have freedom to move in three orthogonal axes. The at least one proof mass operates as both a drive and sense oscillator in two different, normal modes, which do not influence one another because they are orthogonal. It should be understood, however, that although only one proof mass 100 is shown here, in a Coriolis gyroscope there will typically be two masses vibrating in anti-phase. A larger number of masses is also possible.

The Coriolis gyroscope may be considered as a mechanical system in which the drive oscillator is the motor that keeps it running and the sense oscillator is the detector that provides information about the rate of rotation. In a single oscillator, however, the electrodes are switched in time between sensing the position of the mass, and driving the mass with an electrostatic force. Accordingly, for ease of understanding, position sensing will be referred to as 'detection', or 'read-out', and driving the mass is referred to as 'feedback' herein.

Drive electrodes 101, sense electrodes 102 and frequency matching electrodes 103 are arranged about the proof mass 100. The drive electrodes 101 are arranged to detect the drive oscillation and to provide feedback to the drive oscillator and the sense electrodes 102 are arranged to detect the sense oscillation and to provide feedback to the sense oscillator. The frequency matching electrodes 103 are arranged to apply an electrostatic force between the proof mass and electrodes to effect a change in the natural frequency of the sense oscillator.

A drive oscillator feedback loop is arranged to receive and process the drive oscillation signal detected by the drive electrodes 101 to provide a drive feedback signal to the drive oscillator that keeps it oscillating at its natural frequency with a pre-defined amplitude.

The drive oscillator feedback loop comprises a multiplexer 104 connected, via amplifiers 105, to an analogue-digital converter (ADC) 106. The ADC 106 is connected to a rectifier 107 and a regulator 108, which are serially connected together in parallel with a filter 109, the regulator 108 and filter 109 feeding into a multiplier which is then connected to a digital-analogue converter (DAC) 110. The drive feedback loop is completed by the DAC 110 connecting to the multiplexer 104 such that a positive feedback signal received by the drive electrodes 101 from the multiplexer 104 causes the proof mass 100 to oscillate at its natural frequency in the drive oscillator mode.

As well as being used to provide a feedback signal to the drive oscillator, after being converted to a digital signal, the detected drive oscillation signal is also sent to a Phase Locked Loop (PLL) 116, which is configured to produce a cosine wave in-phase ("I" signal) with the drive oscillation signal and a sine wave 90 degrees out of phase ("Q" signal) with the drive oscillation signal, the PLL 116 being connected to multipliers 117, 118. The PLL is further configured to send an estimate of the drive oscillation signal to a Transfer Function Block 121 for comparison against an estimated resonance frequency of the sense oscillator, as will be described in more detail further on.

A sense oscillator feedback loop is arranged to receive a sense oscillation signal detected by the sense electrodes 102, which is indicative of the angular rate of rotation of the gyroscope. The sense feedback loop comprises a multiplexer 111 connected via amplifiers 112 to an analogue-to-digital converter (ADC) 113. The ADC 113 is connected to a filter 114 that is in turn connected to a summing node. The summing node feeds into a digital-to-analogue (DAC) converter 115 and the sense feedback loop is completed by the DAC 115 connecting to the multiplexer 111 such that a feedback signal is received by the sense electrodes 102. This feedback signal provides a negative feedback which reduces the quality factor (Q) of the sense oscillator. The ADC 113 of the sense oscillator feedback loop is also connected to the Transfer Function Block (TFB) 121 via TFB multipliers 155, 156, and to output multipliers 117, 118, all of which will be described further on.

A pilot tone generator 160 is also provided, the pilot tone generator 160 being connected to the summing node of the sense oscillator feedback loop and also to the Transfer Function Block 121 via the TFB multipliers 155, 156.

The Transfer Function Block 121 comprises the TFB multipliers 155, 156, which are arranged to receive the sense oscillator signal and pilot tones generated by the pilot tone generator 160, and are each connected to a low pass filter 153, 154, respectively. The filters 153, 154 are both connected to a phase and magnitude calculator 150, which connects to a transfer function estimation block 151 and then a frequency feedback block 152 in series. The frequency feedback block 152 is also connected to the PLL, so that it can receive an estimate of the drive oscillation frequency, as mentioned earlier, and a digital-to analogue converter 122 that is provided external to the Transfer Function Block 121, which is connected to the frequency matching electrodes 103 for supply of a control signal.

In operation, the proof mass 100 is driven to oscillate at its natural frequency in the drive mode by the drive oscillation feedback loop. The drive oscillator electrodes 101 detect a drive oscillation signal proportional to the motion of the forced oscillation of the proof mass 100. The drive oscillation signal is sampled by the multiplexer 104 and transferred to the amplifiers 105 before being converted to a digital value by the ADC 106. The amplitude of the electric drive signal is detected by a rectifier 107, and a regulator 108 sets a loop gain to maintain a constant drive signal amplitude. The filter 109 compensates the phase at the frequency of the drive oscillation to ensure positive feedback in the drive oscillator feedback loop.

The digital feedback signal is converted to analogue in the DAC 110, and time-multiplexed to the drive oscillator electrodes 101 by the multiplexer 104. The drive oscillator electrodes 101 then use the positive feedback signal to drive the proof mass 100 to oscillate at the natural frequency of the drive oscillator according to the feedback signal.

At the same time, the sense oscillator electrodes 102 detect a sense oscillation signal proportional to the motion of the sense oscillator. The drive oscillation signal is sampled by the multiplexer 111 and transferred to the amplifiers 112 before being converted to a digital signal by the ADC 113.

The resulting digital signal is input to the filter 114, which changes the amplitude and phase of the digital signal so that it provides negative feedback to reduce the quality factor (Q) and the amplitude of the sense oscillation when applied as a feedback signal to the sense oscillator electrodes 102. The sense oscillator feedback signal is then converted to analogue in the DAC 115 and time-multiplexed to the sense electrodes 102 by the multiplexer 111.

Matching the natural frequency of the sense oscillator to that of the drive oscillator is achieved as follows.

The pilot tone generator 160, utilizing the iterative NORDIC algorithm, table look-up or other suitable method, generates a pilot tone in the form of a precise, low-noise sinusoidal waveform having an in-phase component "I" and a quadrature component "Q". The frequency, amplitude and phase of the pilot tone can be set by providing suitable control signals to the pilot tone generator 160. The control signals are arranged to produce a sequence of two or more pilot tones, each of a predetermined duration, amplitude and phase.

For each different frequency sinusoid created, the pilot tone generator 160 creates both a pilot tone signal (pilot "I" output) and a corresponding quadrature pilot tone signal (pilot "Q" output), which is 90 degrees out of phase with the pilot "I" output.

Each pilot "I" output is added to the digital sense oscillator signal in the sense oscillator feedback loop by adjusting it in amplitude using the variable gain block 161 to match the amplitude of the sense oscillator signal before digitally adding it to the sense feedback signal upstream of the DAC 115.

When the sense oscillator feedback signal is applied to the proof mass 100 by the sense electrodes 102, the pilot "I" output in the sense feedback signal creates a torque that causes the sense oscillator to oscillate at the frequency of the pilot "I" output. However, the amplitude and the phase of the mechanical oscillation depend on the difference between the frequency of the applied pilot "I" output and the natural frequency of the sense oscillator.

The signal read out from the sense oscillator therefore contains both the pilot tone frequency and the drive oscillator frequency (and noise) and is therefore a single composite signal containing both the pilot tone frequency and the excitation frequency. However, the pilot tone component of the read-out signal has a phase shift relative to the pilot "I" output, so it has both an in-phase ("I") component and a quadrature ("Q") component, and is referred to herein as the "pilot input".

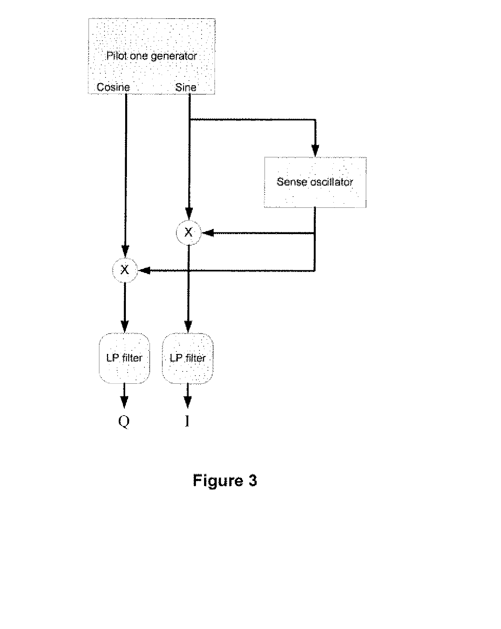

The natural frequency of the sense oscillator is adjusted following processing in the Transfer Function Block 121. In order to extract the pilot signal from the detected sense oscillation signal, the pilot input signal is synchronously demodulated by multiplying it with both the (in-phase) pilot "I" output and the (quadrature) pilot "Q" output generated by the pilot tone generator 160 at the TFB multipliers 155, 156, as illustrated in Figure 3. The synchronous demodulation of an amplitude modulated signal is a known technique, as described, for example, by H. Taub and D. Schilling in "Principles of Communication Systems", McGrawHill, Chapter 3.

Synchronous demodulation of the pilot input signal provides the baseband "I" and "Q" components of the pilot input. The gain (attenuation) and phase shift due to the passage of the pilot signal through the sense oscillator can then be determined from the amplitudes of the "I" and "Q" components by the magnitude and phase calculator 150. This is accomplished, for example, by using a discrete Fourier transform of the complex signal from the demodulator, or by straightforward magnitude and angle calculations on the complex value.

The pilot tones should be placed either side of the sense oscillator resonance frequency and outside the gyroscope pass-band, but close enough to the resonance frequency of the sense oscillator where they can be detected with a sufficient signal-to-noise ratio.

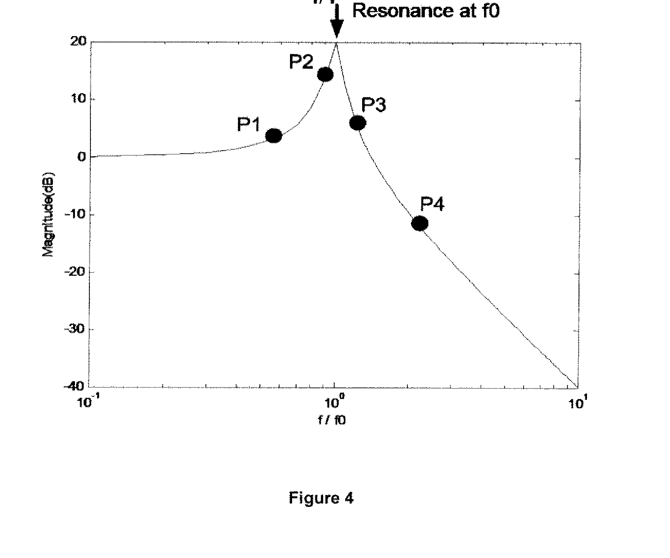

The gain and phase shift in the pilot "I" output, caused by its passage through the sense oscillator and resulting in the pilot input signal, will be different for each pilot tone generated. The transfer function estimator 151 applies an iterative curve fitting procedure using the different gain and phase shifts determined for each of the multiple pilot inputs to estimate a transfer function of the sense oscillator, an example of which is illustrated in Figure 4. The magnitude, or absolute value, of the transfer function has a peak value at a frequency which is taken to be an estimate of the sense oscillator's resonance frequency and hence its natural frequency.

This estimated natural frequency of the sense oscillator is then compared at the frequency feedback block 152 with the known natural frequency of the drive oscillator that is sent to the frequency feedback block 152 by the PLL 116 and, if there is a difference, the frequency matching electrodes 103 are controlled to effect a change in the natural frequency of the sense oscillator by applying an electrostatic force between the proof mass 100 and the frequency matching electrodes.

More specifically, the calculated frequency difference and the theoretical sensitivity of the sense oscillation and drive oscillation frequencies to the average voltage between the proof mass 100 and the drive and sense electrodes 101, 102 yield the voltage to be applied to the frequency matching electrodes 103.

Alternatively, the frequency matching voltage can be added to the sense electrodes 102, thereby avoiding the need for separate electrodes for the frequency matching.

The transfer function is updated at a rate of 1 Hz, for example, and the process repeats until the natural frequencies of the drive oscillator and sense oscillator are matched. This frequency matching process occurs continuously while the gyroscope is in use to ensure that the natural frequencies of the drive and sense oscillators remain matched should the natural frequency of either change, for example as a result of a temperature change in the system.

The update rate of 1 Hz is not critical, however, because the drift of the frequency matching is mainly related to temperature changes which typically have a time scale of minutes. Depending on the mechanical design of the gyroscope, its natural frequencies may be sensitive to linear acceleration and the force of gravity. For certain applications, it may in such cases be desirable to employ a higher update rate of the frequency matching.

Once the natural frequency of the sense oscillator matches that of the drive oscillator, the component of the sense signal that is caused by the Coriolis effect and is therefore proportional to the angular rotation rate of the gyro, will be in phase with the drive signal. To obtain an accurate angular rate of the gyroscope, the detected sense oscillation signal is multiplied with the sine and cosine outputs from the PLL 116, respectively, in "output" multipliers 117 and 118, and then filtered through low-pass filters 119 and 120, to provide demodulated in-phase component "I" and quadrature component "Q" rate signals. The "I" component is the Coriolis signal, which is indicative of the angular rate.

## Claims

1. A method of matching, in a Coriolis gyroscope, the natural frequency of a sense oscillator to the natural frequency of a drive oscillator, comprising:
generating a plurality of pilot tones of different frequencies and adding each pilot tone to a feedback signal that drives the sense oscillator;
detecting a gain and phase difference in each pilot tone after it has passed through the sense oscillator;
estimating a transfer function for the feedback signal using the detected gain and phase difference for each pilot tone;
determining an estimated transfer function, which is indicative of the natural frequency of the sense oscillator;
comparing the estimated natural frequency of the sense oscillator to a known natural frequency of the drive oscillator to obtain a difference; and
controlling frequency matching electrodes, using the difference, to effect a change in the natural frequency of the sense oscillator.

2. The method of claim 1, wherein a corresponding quadrature pilot tone is generated for each pilot tone, each quadrature pilot tone being 90 degrees out of phase with the corresponding pilot tone.

3. The method of claim 1 or 2, wherein detecting comprises:
detecting a sense oscillation signal, which contains both the drive oscillation signal and the pilot tone;
demodulating the sense oscillation signal by multiplying it with both the pilot tone and quadrature pilot tone to obtain an in-phase (I) component and a quadrature (Q) component of each pilot tone after it has passed through the sense oscillator;
low-pass filtering the demodulated sense oscillation signal; and
calculating the magnitude and phase of the demodulated pilot tones, due to passage through the sense oscillator, from the amplitudes of the I and Q components of each pilot tone.

4. The method of any preceding claim, wherein estimating a transfer function comprises applying an iterative curve fitting procedure using the different magnitude and phase shifts calculated for each demodulated pilot tone, wherein the frequency at the peak value of the transfer function is indicative of the natural frequency of the sense oscillator.

5. The method of any preceding claim, wherein the step of comparing comprises:
receiving the drive oscillation signal from a drive oscillation feedback loop arranged to maintain the drive oscillation at the natural frequency of the drive oscillator;
receiving an estimated natural frequency for the sense oscillator; and
determining a difference between the two frequencies.

6. The method of any preceding claim, wherein the step of controlling the frequency matching electrodes comprises:
supplying a voltage to the frequency matching electrodes that is calculated using a determined difference between the natural frequencies of the drive and sense oscillators to apply an electrostatic field to the sense oscillator to alter its characteristics and hence its natural frequency.

7. The method of claim 6, wherein the frequency matching electrodes are further arranged to detect a sense oscillation and apply a feedback signal to the sense oscillator.

8. The method of any preceding claim, further comprising the step of placing the pilot tones either side of the estimated sense oscillator natural frequency.

9. The method of any preceding claim, further comprising adapting a proof mass to function as both the drive oscillator and sense oscillator in two separate, orthogonal modes.

10. The method of any preceding claim, further comprising providing a drive feedback oscillation loop arranged to detect the natural frequency of the drive oscillator and to apply a feedback signal to the drive oscillator to maintain the drive oscillation at the natural frequency of the drive oscillator.

11. The method of any preceding claim, further comprising:
sending the drive oscillation signal to a Phase Locked Loop (PLL);
generating, at the PLL, a cosine wave being in-phase with the drive oscillation signal and a sine wave being 90 degrees out of phase with the drive oscillation signal;
multiplying the detected sense oscillation signal with both the in-phase cosine and the quadrature sine, respectively, of the PLL output; and
low pass filtering the resulting signals.

12. The method of any preceding claim, further comprising providing the drive oscillation signal for comparison against the estimated natural frequency of the sense oscillator from a Phase Locked Loop.

13. The method of any preceding claim, further comprising providing negative feedback to the sense oscillator to reduce its quality factor (Q) and amplitude.
